(19) Europäisches Patentamt
European Patent Office
Office européen des brevets

(11) **EP 2 784 168 B1**

(12) **EUROPEAN PATENT SPECIFICATION**

(45) Date of publication and mention
of the grant of the patent:
**23.11.2016 Bulletin 2016/47**

(21) Application number: **12851373.6**

(22) Date of filing: **29.06.2012**

(51) Int Cl.:
*C21D 8/02* *(2006.01)*    *C22C 38/00* *(2006.01)*
*C22C 38/02* *(2006.01)*    *C22C 38/04* *(2006.01)*
*C22C 38/08* *(2006.01)*    *C22C 38/12* *(2006.01)*
*C22C 38/14* *(2006.01)*    *C22C 38/16* *(2006.01)*
*C22C 38/60* *(2006.01)*    *B23K 35/30* *(2006.01)*

(86) International application number:
**PCT/JP2012/066674**

(87) International publication number:
**WO 2013/077022 (30.05.2013 Gazette 2013/22)**

(54) **STEEL MATERIAL FOR WELDING**

STAHLMATERIAL ZUM SCHWEISSEN

MATÉRIAU À BASE D'ACIER SOUDABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2011 JP 2011257688**

(43) Date of publication of application:
**01.10.2014 Bulletin 2014/40**

(73) Proprietor: **Nippon Steel & Sumitomo Metal
Corporation
Tokyo 100-8071 (JP)**

(72) Inventors:
• **FUKUNAGA, Kazuhiro**
**Tokyo 100-8071 (JP)**
• **WATANABE, Yoshiyuki**
**Tokyo 100-8071 (JP)**
• **USUI, Shinsuke**
**Tokyo 100-8071 (JP)**
• **CHIJIIWA, Rikio**
**Futtsu-shi,
Chiba 293-0011 (JP)**

(74) Representative: **Vossius & Partner
Patentanwälte Rechtsanwälte mbB
Siebertstrasse 3
81675 München (DE)**

(56) References cited:
WO-A1-01/59167    WO-A1-2010/134323
WO-A1-2010/134353    DE-T2- 60 108 350
JP-A- H09 310 147    JP-A- 2005 171 300
JP-A- 2006 124 759    JP-A- 2007 211 334
US-A- 5 985 053    US-A1- 2010 078 097

**Description**

[Technical Field of the Invention]

The present invention relates to a steel for welding having a high CTOD property of a heat affected zone (HAZ) during small heat input welding to medium heat input welding; and a method of producing the same. In particular, the present invention relates to a steel for welding having high CTOD property of a heat affected zone, in which CTOD property of FL (a fusion line), that is, a boundary between a weld metal (WM) and a heat affected zone (HAZ) and IC zone (an intercritical HAZ zone), that is a boundary between the HAZ and a base material (BM), where toughness most significantly deteriorates during small heat input welding to medium heat input welding, are superior.

[Related Art]

Recently, along with the development of cold regions or the like, a steel used in a harsh environment has been required. For example, a high-strength steel suitable for a steel structure such as an offshore structure which is used in cold regions such as the Arctic or an earthquake-resistant building is required. In the above-described steel used in cold regions, a requirement for a crack tip opening displacement (CTOD) property, which is an index of fracture toughness, is higher than that of a steel of the related art. In both a base material and a heat affected zone, a high CTOD property is required.

The CTOD property of the heat affected zone (HAZ) is evaluated in a test where notches are formed at two positions including the FL and the IC zone. However, currently, in most cases, only the FL has been a target for improvement of the CTOD property.

The reason is presumed to be that, under a condition where a test temperature is less harsh (for example, about -10°C), if the CTOD property of the FL is satisfied, the CTOD property of the IC zone is sufficient.

However, it was found that, under a harsh test condition of -80°C which is required for steel used in cold regions such as the Arctic, there is a problem in that the CTOD value of the IC zone, which has caused no problem even without being considered, is low. Therefore, a technique of improving both the CTOD property of the FL and the CTOD property of the IC zone is required.

For example, Patent Document 1 discloses a technique capable of obtaining a high CTOD property in a welded joint during small to medium input welding under a test condition of -60°C. However, the CTOD property of the IC zone is not disclosed.

Patent Document 2 and Patent Document 3 disclose a technique of securing a CTOD property in an environment of -60°C by satisfying parameters of $P_{CTOD}$ and CeqH in consideration of not only the FL but the IC zone. However, the present inventors found that, when the CTOD property at -80°C of steel produced based on this technique was investigated, the required property was not satisfied. Further, as a result of a detailed investigation on the correspondence relationship between the CTOD property of a practical welded joint at -80°C and the results of a simulated thermal cycle test, it was found that, in order to satisfy the CTOD property of the practical welded joint at -80°C, $T\delta_c 0.1$, which is the lower limit temperature at which the limit CTOD value is greater than or equal to 0.1 mm in the simulated thermal cycle test, is required to be lower than or equal to -125°C. Further, it was found that, in order to satisfy $T\delta_c 0 \le -125$, it is necessary for the following parameters to satisfy $P_{CTOD} \le 0.02$ and CeqH $\le 0.225\%$, the parameters being defined by Patent Document 2 when Ni is not added and being defined by Patent Document 3 when Ni is added. In this case, $P_{CTOD}$ is a parameter used to evaluate a steel component which has an effect on $T\delta_c 0.1$ (FL) representing the CTOD property of the FL, and CeqH is a parameter used to evaluate a steel component which has an effect on the CTOD property through the hardness of the 1C zone.

$$P_{CTOD}=[C]+[Cu]/22+[Ni]/67+[V]/3\ldots \qquad \text{Equation 1}$$

$$CeqH=[C]+[Si]/4.16+[Mn]/14.9+[Cu]/12.9+[Ni]/105+[V]/1.82 \qquad \ldots$$

$$\text{Equation 2}$$

In the equations, each element represents the content (mass%) of the element in steel.

However, in this case, since the limited values of $P_{CTOD}$ and CeqH are low, it is necessary that the amount of an alloy element which can be added is significantly limited. Therefore, with a steel plate having a thickness of 6 mm to 100 mm which is commonly used as a structural material, a high strength cannot be obtained. The high strength described in the present invention represents a yield strength (YS) being higher than or equal to 355 N/mm$^2$ and a tensile strength (TS) being higher than or equal to 480 N/mm$^2$. It is preferable that the thickness is 12 mm to 80 mm, the yield strength is 400 N/mm$^2$ to 550 N/mm$^2$, and the tensile strength is lower than or equal to 610 N/mm$^2$.

For use in an actual structure, it is more preferable that the thickness is 30 mm to 60 mm, the yield strength is 420 N/mm$^2$ to 500 N/mm$^2$, and the tensile strength is lower than or equal to 570 N/mm$^2$. Although the steel includes a steel plate and a steel pipe, the same shall be applied to the steel plate.

Meanwhile, for example, Patent Document 4 discloses a technique of improving a CTOD property at a low temperature by adding B. The technique of improving a CTOD property by controlling the addition amount of B to be 0.0005% to 0.0020% is disclosed. However, a target property of Patent Document 4 is a CTOD property at -30°C and -50°C. Regarding steel produced based on this technique, when the present inventors investigated a CTOD property in an environment of -80°C under welding conditions of a submerged arc welding (SAW) method intended in the present invention, the required property was not satisfied.

In addition, for example, Patent Document 5 discloses a technique of improving HAZ toughness by adding 0.0003% to 0.003% of B and controlling the amount of solid-solubilized B to be 0%. However, this technique presupposes large heat input welding, and a target property thereof is HAZ toughness at -20°C. Regarding steel produced based on this technique, when the present inventors investigated a CTOD property in an environment of -80°C under welding conditions of a submerged arc welding (SAW) method mainly conceived in the present invention, the required property was not satisfied.

[Prior Art Document]

[Patent Document]

[Patent Document 1 Japanese Unexamined Patent Application, First Publication No. 2007-002271
[Patent Document 2] Japanese Unexamined Patent Application, First Publication No. 2010-248590
[Patent Document 3] PCT International Publication No. WO2010/134323A1
[Patent Document 4] Japanese Unexamined Patent Application, First Publication No. H09-1303
[Patent Document 5] PCT International Publication No. WO2009/072559A1

US 2010/0078097 (A1) describes a steel material characterized by containing a specific chemical composition, wherein the contents of C and Nb satisfy C-Nb/7.74 $\leqq$ 0.002 and Ti-based oxides of a grain size of 0.05 to 10 $\mu$m are present in a density of 30 to 300/mm$^2$. JPH 09-310147 describes a steel sheet containing a chemical composition, wherein the oxide is the one in which the total content of Ti and Mg is regulated to $\geq$ 15wt.%, wherein specific oxide sizes are present within specific ranges of pieces/mm$^2$.

EP 2 400 041 (A1) describes a steel for a welded structure comprising a specific chemical composition. A steel component parameter $P_{CTOD}$ is 0.065% or less, and a steel component hardness parameter CeqH is 0.235% or less.

DE 601 08 350 (T2) describes a thick steel plate, characterized in that it has a specific chemical composition. The steel plate has a yield strength of 460 MPa or more and a CTOD in HAZ at -10°C of 0.2 mm or more.

US-B-5,985,053 describes a steel having excellent toughness at a welding heat affected zone, consisting of a specific chemical composition, and containing at least 40 pcs/mm$^2$ of oxide and composite oxide particles of Ti and Mg having a grain size of 0.001 to 5.0 $\mu$m.

[Disclosure of the Invention]

[Problems to be Solved by the Invention]

Among the HAZ, the FL is subjected to thermal history at the highest temperature during welding, and the IC zone is subjected to thermal history at a high temperature close to a melting temperature during multi-layer welding and then subjected to thermal history at a temperature slightly higher than an Acl temperature ($\alpha \rightarrow \gamma$ transformation temperature during heating). In both zones, a CTOD property, in particular, is likely to deteriorate. In the FL subjected to thermal history at a high temperature, the toughness deteriorates by the coarsening of a microstructure. Therefore, it is considered that to fine and make uniform a microstructure is effective. In addition, in both the FL and the IC zone, it is important to reduce large non-metallic inclusions which cause fracture. In order to reduce the non-metallic inclusions, it is considered that reduction in O content (oxygen in steel) is effective. However, on the other hand, when O is reduced, intragranular ferrite (IGF) is decreased, and thus there is a concern that a CTOD property may deteriorate.

Regarding the above-described problems, as described above, there has not been provided a high-strength steel for welding in which the CTOD property of the FL and the CTOD property (fracture toughness) of the IC zone at -80°C satisfy required values. An object of the present invention is to provide a high-strength steel for welding in which the CTOD property of the FL and the CTOD property of the IC zone (fracture toughness) at -80°C satisfy required values during multi-layer welding of small to medium heat input.

The small to medium heat input described in the present invention refers to, for example, a heat input of about 1.5 kJ/mm to 5.0 kJ/mm at a thickness of 50 mm.

[Means for Solving the Problem]

The present inventors have investigated measure which satisfies the strength of a base material as a high-strength steel and satisfies the CTOD properties at -80°C of the FL and the IC zone, which are embrittled zones of the HAZ of the steel subjected to small to medium heat input welding (for example, 1.5 kJ/mm to 5.0 kJ/mm at a thickness of 50 mm.

As a result, it was found that, by reducing O content and suppressing a coarse grain boundary structure, which is formed in the FL by thermal history during welding, to increase an IGF fraction, the CTOD property can be significantly improved. The above-described IGF refers to acicular ferrite which is formed in a petal shape by using Ti oxides in prior austenite grains of the HAZ as nuclei (which is formed to extend to the periphery around the Ti oxides). Since this IGF has an average grain size of 10 $\mu$m or less and is fine, the refining effect is obtained by the IGF itself. In addition, by forming a large amount of the IGF, the formation of a coarse structure which is formed from grain boundaries and is harmful to toughness is suppressed, which results in the refinement of effective grain size. As a result, the IGF significantly contributes to the improvement of a CTOD property.

In addition, it was found that B addition is most effective as a method of increasing the IGF fraction. It has been known that, by B addition, the transformation temperature of steel is decreased, and an effect of making a structure fine and uniform is obtained. However, there are no examples in which B addition is sufficiently utilized to improve the CTOD properties at -80°C for the following reasons: (i) B capable of exhibiting the effects with a small amount of addition is changed in existence state by binding to an element such as N or O present in steel, and thus there are cases where the desired effects may not be exhibited; and (ii) particularly during small to medium heat input welding whose weld heat input is 5.0 kJ/mm or less and a cooling rate after welding is large, there are cases where the CTOD properties may deteriorate along with an increase in the hardness of the HAZ by B addition. The present inventors found that, in order to secure a desired high CTOD property (fracture toughness), it is effective that (i) is controlled using a parameter capable of securing an amount of B, that is, an effective amount of B required to make B present in steel in the solid solution state and exhibiting a desired effect; and (ii) is controlled using a parameter including the amount of B and the amount of C.

Further, the present inventors found that, in order to more effectively utilize the above=described effects of B, it is effective that steel contains fine Ti oxides.

The present invention has been made based on the above-described findings and had adopted the following measures in order to solve the above-described problems and achieve the above-described object.

The present invention relates to the subject-matter disclosed in the claims.

(1) That is, according to an aspect of the present invention, there is provided a steel for welding consisting of, as steel components, by mass%, C: a content [C] of 0.015% to 0.045%, Si: a content [Si] of 0.05% to 0.20%, Mn: a content [Mn] of 1.6% to 2.5%, Ni: a content [Ni] of 0.1% to 1.0%, Ti: a content [Ti] of 0.005% to 0.015%, B: a content [B] of 0.0003% to 0.0015%, N: a content [N] of 0.002% to 0.006%, O: a content [O] of 0.0015% to 0.0035%, P: a content [P] limited to 0.008% or less, S: a content [S] limited to 0.005% or less, Al: a content [Al] limited to 0.004% or less, Nb: a content [Nb] limited to 0.004% or less, Cu: a content [Cu] limited to 0.5% or less, V: a content [V] limited to 0.02% or less, Cr: a content [Cr] limited to 0.1 % or less, Mo: a content [Mo] limited to 0.05% or less, Ca: a content [Ca] limited to less than 0.0003%, Mg: a content [Mg] limited to less than 0.0003%, Sb: a content [Sb] limited to 0.005% or less, Sn: a content [Sn] limited to 0.005% or less, As: a content [As] limited to 0.005% or less, and REM: a content [REM] limited to 0.005% or less, and a balance consisting of Fe and unavoidable impurities, in which $P_{CTOD}$ in the following equation 1 is less than or equal to 0.065%, CeqH in the following equation 2 is less than or equal to 0.225%, FB in the following equation 3 is greater than or equal to 0.0003%, and Bp in the a following equation 4 is 0.09% to 0.30%, wherein in a thickness center portion of a cross-section in a thickness direction, the number of oxide particles having an equivalent circle diameter of 2 $\mu$m or greater is less than or equal to 20 particles/mm$^2$ and the number of Ti oxides having an equivalent circle diameter of 0.05 $\mu$m to 0.5 $\mu$m is $1.0 \times 10^3$ particles/mm$^2$ to $10 \times 10^5$ particles/mm$^2$,

where:

$$P_{CTOD}=[C]+[Cu]/22+[Ni]/67+[V]/3\ldots \qquad \text{Equation 1;}$$

$$CeqH=[C]+[Si]/4.16+[Mn]/14.9+[Cu]/12.9+[Ni]/105+[V]/1.82 \qquad \ldots$$
Equation 2;

$$FB=[B]-0.77\times([N]-0.29\times([Ti]-2\times([O]-0.89\times[Al]))) \quad \ldots \qquad \text{Equation 3;}$$

wherein if O'=[O]-0.89×[Al] ≤5 0, then O'=0; if Ti'=[Ti]-20' ≤ 0, then Ti'=0, if N'=[N]-0.29xTi' ≤ 0, then N'=0, and if FB=[B]-0.77xN' ≤ 0, then FB=0; and

$$Bp=(884\times[C]\times(1-0.3\times[C]^2)+294)\times FB \qquad \ldots \qquad \text{Equation 4.}$$

(2) In the steel for welding according to (1), the Cu content [Cu] may be less than or equal to 0.03%.
(3) In the steel for welding according to (1) or (2), the B content [B] may be greater than or equal to 0.0006%.

As described above, in the steel according to the present invention, the CTOD properties of the FL and the IC zone where toughness most significantly deteriorates during welding such as multi-layer welding of small to medium heat input are extremely high, and thus fracture toughness is superior. As a result, a high-strength steel for welding which is used in a offshore structure, an earthquake-resistant building, or the like and has a high CTOD property in a harsh environment can be obtained.

[Brief Description of the Drawing]

FIG 1 is a diagram illustrating a relationship between FB and the IGF fraction of the FL of a welded joint.
FIG. 2 is a diagram illustrating a relationship between Bp and the minimum value of the CTOD property of a welded joint of the FL at -80°C.

[Embodiments of the Invention]

In an embodiment of the present invention, as described above, in order to refine a microstructure of the FL, B is added. B is segregated on prior austenite grain boundaries and has an effect of decreasing grain boundary energy to significantly delay ferritic transformation of steel. Therefore, a coarse structure such as ferrite, which is formed from grain boundaries of a HAZ structure including coarse austenite grains, is suppressed. Further, by using B in combination with a technique of using oxide-based non-metallic inclusions represented by Ti oxides as transformation nuclei of intragranular ferrite (IGF), a microstructure of the FL is significantly refined. This process is performed in order to increase IGF due to suppressing the transformation of grain boundaries promoting ferritic transformation from the oxide-based non-metallic inclusions present in grain boundaries as the transformation nuclei by solute B. It is necessary that coarse inclusions are decreased because coarse inclusions become fracture origins, and fine inclusions are preferable as the transformation nuclei.

In order to obtain the above-described effects, it is necessary that B in the solute (effective B; FB) is secured in steel containing a predetermined amount of oxide-based non-metallic inclusions as nuclei of intragranular transformation. However, on the other hand, the effect of delaying the ferritic transformation of the grain boundaries obtained by B addition implies improvement of hardenability. Therefore, the hardness of the FL is increased by an increase of hard structure caused by an increase of hardenability, and there is a concern that fracture toughness deteriorates. Therefore, as described below, it is effective to avoid an increase in the hardness of the FL by B addition while securing a required amount of solid-solubilized B.

It was found that, in order to satisfy the CTOD property of a practical welded joint at -80°C while securing B present in steel in the solid solution state (effective B) to efficiently utilize the B addition effects of refining and uniformizing a microstructure of the FL, a parameter FB which is defined in an equation 3 and represents the amount of effective B and a B parameter Bp which is defined in an equation 4 as a parameter for avoiding an increase in HAZ hardness caused by B.

$$FB=[B]-0.77\times([N]-0.29\times([Ti]-2\times([O]-0.89\times[Al]))) \quad \ldots \qquad \text{Equation 3}$$

wherein

$$\text{if } O'=[O]-0.89\times[Al]\leq 0, \text{ then } O'=0;$$

$$\text{if } Ti'=[Ti]-2O'\leq 0, \text{ then } Ti'=0,$$

$$\text{if } N'=[N]-0.29\times Ti'\leq 0, \text{ then } N'=0,$$

and

$$\text{if } FB=[B]-0.77\times N'\leq 0, \text{ then } FB=0.$$

$$Bp=(884\times[C]\times(1-0.3\times[C]^2)+294)\times FB \qquad \ldots \qquad \text{Equation 4}$$

In the above-described equations, each element represents the amount (mass%) of the element in steel.

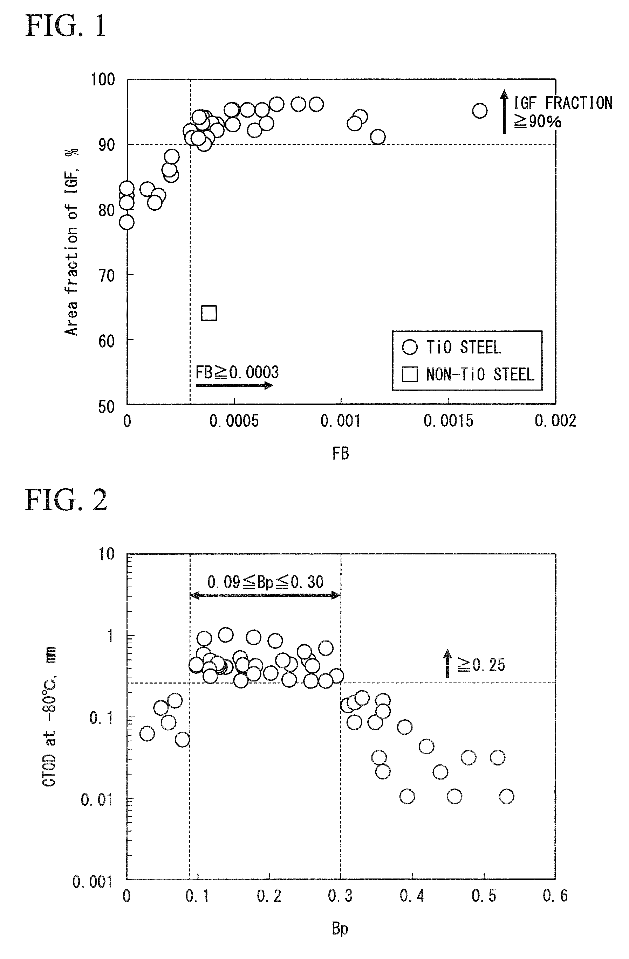

The equation 3 is an equation for calculating the amount of solid-solubilized B (amount of effective B; FB) in steel which is obtained from a stoichiometric ratio in consideration of the strength of a binding power between elements. When FB calculated according to this equation is greater than or equal to 0.0003%, that is, when the amount of effective B is greater than or equal to 0.0003%, B suppresses a coarse grain boundary structure as expected. As a result, in an environment in which IGF can be formed from Ti oxides in the steel, as illustrated in FIG. 1, the IGF fraction in the FL is greater than or equal to 90%. Bp is an empirical equation obtained from analysis in a number of laboratory ingot steels and is parameterized by (Maximum Hardness Estimated from Amount of C)×(Contribution of FB). The higher the amount of FB, the higher HAZ hardness. In particular, FB largely affects a CTOD property at an extremely low temperature as in the embodiment. The present inventors found that, as illustrated in FIG. 2, when Bp is greater than 0.30%, the hardness of the FL is significantly increased, and the CTOD property at -80°C does not satisfy a desired value which is greater than or equal to 0.25 mm. In addition, in the steel for welding according to the embodiment, when the amount of FB is greater than 0.0003%, the amount of Bp is necessarily greater than or equal to 0.09%. Therefore, a region where Bp is less than 0.09 is a region where the effects of solid-solubilized B which are desirable in the steel for welding according to the embodiment are not obtained. Accordingly, Bp is controlled to be greater than or equal to 0.09. Steel illustrated in FIG. 2 satisfies the range of steel for welding according to the embodiment except for Bp.

When FB is greater than 0.0010%, there is a concern that Bp may be greater than 0.30%. Therefore, it is preferable that the upper limit of FB is 0.0010%.

Further, in order to satisfy the CTOD property of a practical welded joint at-80°C, the following is important: the number of oxides having an equivalent circle diameter of 2 μm or greater being less than or equal to 20 particles/mm²; and the number of Ti oxides having an equivalent circle diameter of 0.05 μm to 0.5 μm, which are present in steel as transformation nuclei being $1.0\times10^3$ particles/mm² to $1.0\times10^5$ particles/mm². When the number of oxides having an equivalent circle diameter of 2 μm or greater is more than 20 particles/mm², the oxides cause fracture, and the CTOD property deteriorates. In addition, when the number of Ti oxides having an equivalent circle diameter of 0.05 μm to 0.5 μm is less than $1.0\times10^3$ particles/mm², the number of Ti oxides as nuclei used to form IGF is insufficient. When the number of Ti oxides having an equivalent circle diameter of 0.05 μm to 0.5 μm is greater than $1.0\times10^5$ particles/mm², the Ti oxides cause fracture. In both cases, the CTOD property deteriorates.

As described above, by satisfying both Bp and FB, the further refinement of a microstructure can be achieved while suppressing a significant increase in the hardness of the FL. In addition, it was found that the control of oxide is important. As a result, it was found that when a steel containing the components and the oxide in the specified ranges according to the embodiment is used, Bp and FB are satisfied, $P_{CTOD} \leq 0.065\%$ which is necessary for securing the CTOD properties at -60°C is satisfied, the number of oxides having an equivalent circle diameter of 2 $\mu$m or greater is less than or equal to 20 particles/mm$^2$, and the number of Ti oxides having an equivalent circle diameter of 0.05 $\mu$m to 0.5 $\mu$m, which are present in steel as transformation nuclei, is $1.0 \times 10^3$ particles/mm2 to $1.0 \times 10^5$ particles/mm$^2$, thereby satisfying the CTOD property of the FL at -80°C. $P_{CTOD}$ is greater than or equal to 0.016% in a composition range of each element described below.

On the other hand, under the harsh condition where a test temperature is - 80°C as described above, even if the CTOD property of the FL satisfies a desired value, the CTOD property of the IC zone may not satisfy a desired value. Therefore, the inventors investigated for the IC zone. As a result, it was found that by controlling the number of oxides having an equivalent circle diameter of 2 $\mu$m or greater to be less than or equal to 20 particles/mm2 and satisfying CeqH$\leq$0.225%, the CTOD property at -80°C is satisfied. In this case, CeqH is greater than or equal to 0.135% in the composition range of each element described below.

Hereinafter, the reason for limiting the steel for welding according to the embodiment will be described. First, the reason for limiting the composition of the steel for welding according to the embodiment will be described. In the following composition, "%" represents "mass%".

C: 0.015% to 0.045%

C is an element used to obtain strength, the C content [C] is greater than or equal to 0.015%. In order to obtain high strength at a low cost, the C content [C] is preferably greater than or equal to 0.018%, or greater than or equal to 0.020% and more preferably greater than or equal to 0.025%, or greater than or equal to 0.030%. On the other hand, when the C content [C] is greater than 0.045%, HAZ properties deteriorate, and the CTOD property at -80°C cannot be satisfied. Therefore, the upper limit of the C content [C] is set to 0.045%. In order to obtain a higher CTOD property, the C content [C] is preferably less than 0.042%, or less than 0.040%.

Si: 0.05% to 0.20%

From the viewpoint of obtaining the CTOD property, the less Si content, the better. However, from the viewpoint of deoxidation, the Si content [Si] is set to be greater than or equal to 0.05%. The Si content [Si] is preferably greater than or equal to 0.08%, or greater than or equal to 0.10%. However, when the Si content [Si] is greater than 0.20%, the CTOD property of the FL deteriorates. Therefore, the upper limit of the Si content [Si] is set to 0.20%. In order to obtain a higher CTOD property, the Si content [Si] is preferably less than or equal to 0.18%, or less than or equal to 0.15%.

Mn: 1.6% to 2.5%

Mn is an inexpensive element having a high effect of adjusting a microstructure, has an effect of suppressing transformation form grain boundaries which is harmful to the CTOD property, and barely impairs the CTOD property. Therefore, it is preferable that the addition amount of Mn be increased. When the Mn content [Mn] is less than 1.6%, the effect of adjusting a microstructure is low. Therefore, the lower limit of the Mn content [Mn] is set to 1.6%. The lower limit is preferably 1.7% and more preferably 1.8%. On the other hand, when the Mn content [Mn] is greater than 2.5%, the hardenability of the FL may be excessively high or the hardness of the ICHAZ may be increased. As a result, the CTOD property deteriorates. Therefore, the upper limit of the Mn content [Mn] is set to 2.5%. The upper limit is preferably 2.3%, more preferably 2.2%, and still more preferably 2.0%.

P: 0.008% or less

P is contained as an unavoidable impurity and impairs the toughness of steel when being segregated on grain boundaries. The lower the P content [P], the better. However, since there is a limit in industrial production, the upper limit of the P content [P] is set to 0.008%. In order to obtain a higher CTOD property, the P content [P] is preferably less than or equal to 0.005%. P is an unavoidable impurity, and the lower limit of the P content [P] is 0%.

S: 0.005% or less

P is contained as an unavoidable impurity. From the viewpoint of base metal toughness and the CTOD property, the lower the S content [S], the better. However, since there is a limit in industrial production, the upper limit of the S content [S] is set to 0.005%. In order to obtain a higher CTOD property, the S content [S] is preferably less than or equal to 0.003% or less than or equal to 0.002%. S is an unavoidable impurity, and the lower limit of the S content [S] is 0%.

Ni: 0.1% to 1.0%

Ni is an effective element because Ni causes small deterioration of the CTOD property, is effective for improving the strength of a base metal, and causes a small increase in the hardness of the ICHAZ. However, Ni is an expensive element, which results in an increase in cost. Therefore, the Ni content [Ni] is set to be less than or equal to 1.0%. The Ni content [Ni] is preferably less than or equal to 0.8%, more preferably less than or equal to 0.7%, or less than or equal to 0.6%, and still more preferably less than or equal to 0.5%, or less than or equal to 0.45%. On the other hand, in order to obtain an effect of a case where Ni is added, the lower limit of the Ni content [Ni] is set to 0.1%. In order to more efficiently utilize the effects of Ni, it is preferable that 0.2% or greater of Ni be added, and it is more preferable that 0.25% or greater of Ni be added. When the improvement in the strength of a base metal is prioritized rather than an increase in alloy cost, 0.4% or greater, 0.5% or greater, or 0.6% or greater of Ni may be added.

Al: 0.004% or less

From the viewpoints of forming Ti oxide to obtain IGF, the lower the Al content [Al], the better. Therefore, the upper limit of the Al content [Al] is set to 0.004%. In order to obtain a larger amount of IGF and a higher CTOD property, the Al content [Al] is preferably less than or equal to 0.003%, or less than or equal to 0.002%. The lower limit of the Al content [Al] is 0%.

Ti: 0.005% to 0.015%

Ti forms Ti oxides and refines a microstructure. However, when the Ti content is excessive, coarse TiC is formed in the FL, and the CTOD property deteriorates. In addition, a hard structure may be formed in the IC zone by the formation of TiC, or TiC may cause fracture. Therefore, an appropriate range of the Ti content [Ti] is 0.005% to 0.015%. In order to more efficiently utilize the effects of Ti, the Ti content [Ti] is preferably greater than or equal to 0.007% and more preferably greater than or equal to 0.008%. On the other hand, in order to further improve the CTOD property, the Ti content [Ti] is preferably less than or equal to 0.013%.

Nb: 0.004% or less

Nb is effective from the viewpoints of the strength and toughness of a base metal and is harmful to the CTOD property of the FL. Therefore, the Nb content [Nb] is limited to 0.004% or less which is a range where the CTOD property does not significantly deteriorate. However, in order to further improve the CTOD property, the Nb content [Nb] is preferably limited to 0.003% or less, or 0.002% or less and more preferably limited to 0.001% or less. The lower limit of the Nb content [Nb] is 0%.

B: 0.0003% to 0.0015%

B is an element that is segregated on prior austenite grain boundaries of the HAZ and has an effect of suppressing a coarse grain boundary structure, which is harmful to the CTOD property, and has an effect of uniformizing the microstructure of the FL. Therefore, the B content [B] is set to be greater than or equal to 0.0003%. However, in order to efficiently utilize the effects of B, the B content [B] is preferably greater than or equal to 0.0004%, or greater than or equal to 0.0006%. On the other hand, there is a concern that the hardness of the FL may be significantly increased by excessive addition, and the CTOD property may deteriorate. Therefore, the upper limit of the B content [B] is set to 0.0015%. In order to further improve the CTOD property of the FL, the B content [B] is preferably less than or equal to 0.0013%, or less than or equal to 0.0011%.

N: 0.002% to 0.006%

N is necessary to form Ti nitride. However, when the N content [N] is less than 0.002%, the effect of N is low. Therefore, the lower limit of the N content [N] is set to 0.002%. In order to more efficiently utilize the effect of N, the lower limit of the N content [N] is preferably set to 0.0025% and more preferably set to be 0.003%. On the other hand, when the N content [N] is greater than 0.006%, coarse Ti nitrides which cause fracture are formed, and thus the CTOD property deteriorates. Therefore, the upper limit of the N content [N] is set to 0.006%. In order to obtain a higher CTOD property, the N content [N] is preferably less than or equal to 0.005%. The N content [N] is preferably less than or equal to 0.0045%, or less than or equal to 0.004%.

O:0.0015% to 0.0035%

From the viewpoint of forming Ti oxides as nuclei for forming IGF of the FL, the O content [O] is set to be greater than or equal to 0.0015%. In order to efficiently utilize the effect of O, the O content [O] is preferably greater than or equal to 0.0020%. However, when O is excessive, the size and number of oxides are excessive, and thus the CTOD properties of the FL and the IC zone deteriorate. Therefore, the upper limit of the O content [O] is set to 0.0035%. In order to obtain a higher CTOD property, the O content [O] is preferably less than or equal to 0.0030% and more preferably less than or equal to 0.0028%, or less than or equal to 0.026%.

The above-described elements are essential to the steel for welding according to the embodiment, and it is also effective to add the following elements within a range not impairing the effects of the above-described elements.

Cu: 0.5% or less

Cu is an effective element because Cu has an effect of improving the strength of a base metal and causes a small increase in the hardness of the ICHAZ. However, when the Cu content [Cu] is greater than 0.5%, Cu promotes the formation of martensite-austenite (M-A) constituent and suppresses decomposition thereof, which results in deterioration in the CTOD property of the FL. Accordingly, the limited range of the Cu content [Cu] is set to be less than or equal to 0.5% as a range that does not impair the CTOD property. However, in order to obtain a higher CTOD property, the Cu content [Cu] is preferably less than or equal to 0.3%, or less than or equal to 0.1%. In order to secure a more stable CTOD property, it is preferable that the Cu content [Cu] be limited to 0.05% or less, or 0.03% or less. The lower limit of the Cu content [Cu] is 0%.

V: 0.02% or less

V is an effective element for improving the strength of a base metal. However, when the V content [V] is greater than 0.02%, the CTOD property deteriorates. Therefore, the upper limit of the V content [V] is set to be less than or equal to 0.02% as a range that does not impair the CTOD property. In order to secure a higher CTOD property, the V content [V] is preferably less than 0.01%. The lower limit of the V content [V] is 0%.

In the steel for welding according to the embodiment, the above-described components are contained or limited, and a balance including Fe and unavoidable impurities is contained. However, in addition to the above-described components, the steel for welding according to the embodiment may contain other alloy elements in order to further improve the corrosion resistance and the hot workability of the steel itself or as unavoidable impurities produced from auxiliary raw materials such as scrap. However, in order to sufficiently exhibit the above-described effects (such as the improvement in the toughness of a base metal) of the above-described components (such as Ni), it is preferable that the respective alloy elements (Cr, Mo, Ca, Mg, Sb, Sn, As, and REM) are limited as follows. The amount of each of the alloy elements includes 0%. Even if these elements are intentionally added, the elements may be considered as unavoidable impurities as long as the addition amounts thereof are within ranges described below.

Since Cr impairs the CTOD property, the Cr content [Cr] is less than or equal to 0.1 %, more preferably less than or equal to 0.05%, and most preferably less than or equal to 0.02%. The lower limit of the Cr content [Cr] is 0%.

Since Mo impairs the CTOD property, the Mo content [Mo] is less than or equal to 0.05%, more preferably less than or equal to 0.03%, and most preferably less than or equal to 0.01%. The lower limit of the Mo content [Mo] is 0%.

Since Ca has an effect of suppressing the formation of Ti oxides, the Ca content [Ca] is less than 0.0003% and more preferably less than 0.0002% or less than 0.0001 %. The lower limit of the Ca content [Ca] is 0%.

Since Mg has an effect of suppressing the formation of Ti oxides, the Mg content [Mg] is less than 0.0003% and more preferably less than 0.0002% or less than 0.0001%. The lower limit of the Mg content [Mg] is 0%.

Since Sb impairs the CTOD property, the Sb content [Sb] is less than or equal to 0.005%, more preferably less than or equal to 0.003%, and most preferably less than or equal to 0.001%. The lower limit of the Sb content [Sb] is 0%.

Since Sn impairs the CTOD property, the Sn content [Sn] is less than or equal to 0.005%, more preferably less than or equal to 0.003%, and most preferably less than or equal to 0.001%. The lower limit of the Sn content [Sn] is 0%.

Since As impairs the CTOD property, the As content [As] is less than or equal to 0.005%, more preferably less than or equal to 0.003%, and most preferably less than or equal to 0.001%. The lower limit of the As content [As] is 0%.

Since REM (a rare earth metal) has an effect of suppressing the formation of Ti oxides, the REM content [REM] is less than or equal to 0.005%, more preferably less than or equal to 0.003%, and most preferably less than 0.002% or less tan 0.001%. In addition to the above-described elements, the steel for welding according to the embodiment may contain impurities which are unavoidably mixed thereinto during a production process or the like within a range not impairing the characteristics of the embodiment. However, it is preferable that the steel for welding according to the embodiment not contain the impurities. The lower limit of the impurities is 0%.

Even if steel components are limited as described, the desired effects cannot be obtained without an appropriate production method. Therefore, when the steel for welding according to the embodiment is produced, the following production conditions are preferable.

It is preferable that the steel for welding according to the embodiment is produced with a continuous casting method. The reason is as follows. In this method, the solidification cooling rate of molten steel is fast, and thus the formation of coarse oxides which cause fracture can be avoided. As a result, a larger amount of fine Ti oxides can be formed in scrap. In a method of producing the steel for welding according to the embodiment, it is preferable that an average cooling rate of a center portion of a slab from about a solidifying point to 800°C is faster than or equal to 5 °C/min. The reason is to obtain less than or equal to 20 particles/mm$^2$ of oxides having an equivalent circle diameter of 2 $\mu$m or greater in steel and to obtain $1.0 \times 10^3$ particles/mm$^2$ to $1.0 \times 10^5$ particles/mm$^2$ of Ti oxides having an equivalent circle diameter of 0.05 $\mu$m to 0.5 $\mu$m. When the cooling rate of a slab is slower than 5 °C/min, it is difficult to obtain fine oxide, and coarse oxides are increased. On the other hand, even if the average cooling rate is faster than 50 °C/min, the number of fine Ti oxides is not increased, but rather the production cost is increased. Therefore, the average cooling rate may be slower than or equal to 50°C/min.

The average cooling rate of a center portion of a slab can be obtained by thermal transfer calculation after measuring a cooling rate of a slab surface. In addition, the average cooling rate can also be obtained by thermal transfer calculation after measuring a casting temperature and the amount of cooling water.

During slab rolling, the reheating temperature (heating temperature) is preferably 950°C to 1100°C. When the reheating temperature is higher than 1100°C, Ti nitrides are coarsened, the toughness of a base metal deteriorates, and the effect of improving the CTOD property is decreased. In addition, when the reheating temperature is lower than 950°C, the load of rolling is high, which significantly inhibits productivity. Therefore, the lower limit of the reheating temperature is preferably set to 950°C. From the viewpoints of securing base metal toughness and the productivity, the reheating temperature is preferably 950°C to 1100°C. However, when higher base metal toughness is required, the reheating temperature is more preferably 950°C to 1050°C.

In the production method, after reheating, it is preferable that a thermo-mechanical treatment is performed. This is because even if steel has a high CTOD property, when toughness of a base metal is poor it is not sufficient as the steel for welding. The thermo-mechanical treatment is a treatment of controlling a rolling temperature to a suitable range according to steel components and then optionally performing water cooling or the like. Through this treatment, austenite grains and a microstructure can be refined. As a result, the strength of steel and the toughness can be improved. As a condition of the thermo-mechanical treatment, it is preferable that a cumulative rolling reduction in a non-recrystallization temperature range (700°C to 850°C) is higher than or equal to 30%.

Examples of a method of the thermo-mechanical treatment include (i) controlled rolling (hereinafter, simply referred to as CR), (ii) controlled rolling-accelerated cooling (CR+ACC; hereinafter, simply referred to as ACC), and (iii) controlled rolling-accelerated cooling-tempering (CR+ACC+T; hereinafter simply referred to as ACC+T). Among these methods, (ii) controlled rolling-accelerated cooling is preferable. Examples of the respective methods of the thermo-mechanical treatment will be described. In the case of (i) controlled rolling, a slab is heated at 950°C to 1100°C, is rolled at a cumulative rolling reduction of 30% or higher in a non-recrystallization temperature range (700°C to 850°C), and then is air-cooled to room temperature. In the case of (ii) controlled rolling-accelerated cooling, the same procedure as that of (i) is performed until rolling, followed by accelerated cooling with a water cooling machine from 650° or higher to 500°C or lower at a cooling rate of 5 °C/s or faster. In the case of (iii) controlled rolling-accelerated cooling-tempering, the same procedure as that of (ii) is performed until accelerated cooling, followed by tempering in a heat treatment furnace at 400°C to 660°C. After the thermo-mechanical treatment, even if this steel is reheated at a temperature lower than or equal to the Ar3 transformation point for purposes such as dehydrogenation treatment, the characteristics of the steel for welding according to the environment are not impaired.

<Examples>

Hereinafter, the present invention will be described based on examples.

Steel making was performed in a converter, molten steel was cast into slabs, and these slabs were subjected to a thermo-mechanical treatment in a steel plate production process. As a result, steel plates having various steel components were produced. Next, regarding each of the produced steel plates, a base metal strength test and a CTOD test of a welded joint were performed. Using a submerged arc welding (SAW) method which was commonly used during test welding, the welded joint was manufactured by K-groove under a welding condition of a weld heat input of 4.5 kJ/mm to 5.0 kJ/mm such that fusion lines (FL) were vertically formed.

In the CTOD test, 5 test specimens having a size of t(thickness)$\times$2t were tested according to BS7448 Part1 (British Standard) at -80C under a condition where a notch of 50% fatigue crack was formed at notch position which is the FL (boundary between the WM and the HAZ) or the IC zone (boundary between the HAZ and the BM (base metal)). The desired minimum and average values of CTOD were greater than or equal to 0.25 mm.

A HAZ structure of the FL was etched with a Nital etchant and was observed through an optical microscope and a SEM. The IGF fraction was obtained by observing a structure image in three visual fields at an arbitrary magnification, measuring area ratios thereof by visual inspection, and averaging the area ratios.

The number of oxides of the steel was measured with the following method. A cross-section sample of a center portion in a thickness direction was collected from each of the steels. Using a field emission scanning electron microscope (FE-SEM), coarse oxides having an equivalent circle diameter of 2 μm or greater were observed to measure the size and the number thereof. Regarding Ti oxides having an equivalent circle diameter of 0.05 μm to 0.5 μm, similarly, a sample was collected from the center portion in the thickness direction. An extraction replica film was created from the sample which was electrolytically polished by Selective Potentiostatic Etching by Electrolytic Dissolution (SPEED). The extraction replica film was observed with a field emission transmission electron microscope (FE-TEM) at 10000 magnifications to 1000000 maginifications. Using energy dispersive X-ray spectrometry (EDX), oxides in which a weight ratio of Ti obtained from characteristic X-rays was higher than or equal to 10% were determined as Ti-containing oxides. Based on these results, the size and the number of the Ti-containing oxides were measured. By observing a thickness center portion of a cross-section of each sample in the thickness direction in 20 or more visual fields, the average value of the numbers of oxide particles per unit area was calculated. The reason why the measurement position was set to the thickness center portion is that the CTOD property is particularly affected by the toughness of the thickness center portion which is affected by plastic constraint. The cross-section in the thickness direction is a cross-section obtained by cutting the steel along the thickness direction (direction from the front surface to the back surface of the steel plate).

Tables 1 and 2 show the chemical compositions of the steels, and Tables 3 and 4 show the production conditions, the base metals, and the CTOD properties of the welded joint. In Tables 3 and 4, the symbols of the thermo-mechanical treatment represent the following heat treatment methods.

CR: Controlled rolling (rolling was performed in a temperature range optimum for strength and toughness)
ACC: Accelerated cooling (after controlled rolling, water cooling was performed to a temperature range from 400°C to 600°C, followed by controlled rolling)
ACC+T: Quenching immediately after rolling, +tempering (immediately after rolling, water cooling was performed to room temperature, followed by tempering)

Among the chemical compositions of Tables 1 and 2, Cr, Mo, Ca, Sb, Sn, As, and REM were not intentionally added.

Among the CTOD test results of the welded joint in Tables 3 and 4, $\delta_{CAve}$ represents the average value of the five test results, and $\delta_{Cmin}$ represents the minimum value of the five test results.

In the steels produced according to the present invention (Steels 1 to 33 according to the present invention), the yield strength (YS) was higher than or equal to 420 N/mm$^2$, the tensile strength (TS) was higher than or equal to 480 N/mm$^2$, and the CTOD value at -80°C was greater than or equal to 0.30 mm at $\delta_{Cmin}$ of the FL notch and was greater than or equal to 0.63 mm at $\delta_{Cmin}$ of the IC notch, that is, the fracture toughness was superior. In addition, at this time, the IGF fraction in the HAZ structure of the FL was higher than or equal to 90% in all the steels.

In Steel 34, the chemical composition satisfied the chemical composition according to the present invention, but the cooling rate of the slab did not satisfy the desirable production conditions. As a result, the number of oxide particle having an equivalent circle diameter of 2 μm or greater, or the number of Ti oxides having an equivalent circle diameter of 0.05 μm to 0.5 μm was out of the range of the present invention, and the CTOD properties of the FL and the IC zone did not satisfy the desired values.

On the other hand, as clearly seen from Table 2, Steels 35 to 55 are Comparative Examples in which the chemical composition was out of the range of the present invention. In these steels, the following conditions were different from those of the present invention: the C content (Steel 38), the Si content (Steel 43), the Mn content (Steel 37, Steel 47), the Ni content (Steel 35), the Al content (Steel 52), the Ti content (Steel 36, Steel 44, Steel 50), the B content (Steel 41, Steel 45, Steel 49), Nb content (Steel 53), the O content (Steel 39, Steel 55), the N content (Steel 51), the Cu content (Steel 42), the V content (Steel 46), $P_{CTOD}$ (Steel 48), CeqH (Steel 37, Steel 40, Steel 42, Steel 48), FB (Steel 39, Steel 45, Steel 46, Steel 47, Steel 50, Steel 51), and Bp (Steel 38, Steel 39, Steel 41, Steel 45, Steel 46, Steel 47, Steel 49, Steel 50, Steel 51, Steel 54). In addition, in Steel 52, the A1 content was different from that of the present invention. As a result, the number of Ti oxides having an equivalent circle diameter of 0.05 μm to 0.5 μm did not satisfy that of the present invention. The strength values of most of the comparative steels were equivalent to those of the steels according to the present invention although the strength values of a part of the comparative steels were lower than the desired strength. However, the CTOD values were poor. Therefore, the comparative steels were not appropriate as a steel used in a harsh environment.

[Table 1]

| | | CHEMICAL COMPONENT (mass%) | | | | | | | | | | | | | | | | | | | | | | | | |
|---|---|---|---|---|---|---|---|---|---|---|---|---|---|---|---|---|---|---|---|---|---|---|---|---|---|---|
| | | C | Si | Mn | P | S | Ni | Al | Ti | Nb | N | B | O | Cu | V | Cr | Mo | Ca | Mg | Sb | Sn | As | REM | $P_{CTOD}$ | $C_{eqH}$ | FB | Bp |
| STEEL ACCORDING TO PRESENT INVENTION | 1 | 0.031 | 0.10 | 2.50 | 0.004 | 0.003 | 0.26 | 0.002 | 0.011 | 0.002 | 0.0026 | 0.0005 | 0.0022 | 0.00 | 0.000 | 0.01 | 0.00 | 0.0003 | 0.0001 | 0.003 | 0.002 | 0.003 | 0.0002 | 0.035 | 0.225 | 0.00050 | 0.16 |
| | 2 | 0.042 | 0.13 | 1.72 | 0.004 | 0.002 | 0.44 | 0.002 | 0.005 | 0.001 | 0.0022 | 0.0011 | 0.0020 | 0.00 | 0.000 | 0.01 | 0.00 | 0.0002 | 0.0003 | 0.002 | 0.001 | 0.002 | 0.0001 | 0.049 | 0.193 | 0.00042 | 0.14 |
| | 3 | 0.040 | 0.20 | 1.81 | 0.003 | 0.003 | 0.46 | 0.002 | 0.011 | 0.002 | 0.0025 | 0.0004 | 0.0021 | 0.00 | 0.000 | 0.01 | 0.00 | 0.0003 | 0.0001 | 0.003 | 0.002 | 0.001 | 0.0002 | 0.047 | 0.214 | 0.00040 | 0.13 |
| | 4 | 0.039 | 0.14 | 1.65 | 0.004 | 0.003 | 0.99 | 0.002 | 0.010 | 0.002 | 0.0032 | 0.0006 | 0.0018 | 0.00 | 0.000 | 0.01 | 0.00 | 0.0002 | 0.0003 | 0.001 | 0.001 | 0.003 | 0.0003 | 0.054 | 0.193 | 0.00036 | 0.12 |
| | 5 | 0.043 | 0.12 | 1.95 | 0.005 | 0.002 | 0.43 | 0.003 | 0.015 | 0.001 | 0.0058 | 0.0015 | 0.0027 | 0.00 | 0.000 | 0.01 | 0.00 | 0.0003 | 0.0002 | 0.002 | 0.002 | 0.001 | 0.0003 | 0.049 | 0.207 | 0.00037 | 0.12 |
| | 6 | 0.045 | 0.11 | 1.80 | 0.004 | 0.002 | 0.30 | 0.002 | 0.012 | 0.001 | 0.0035 | 0.0010 | 0.0020 | 0.32 | 0.000 | 0.01 | 0.00 | 0.0003 | 0.0000 | 0.003 | 0.003 | 0.002 | 0.0002 | 0.064 | 0.220 | 0.00089 | 0.30 |
| | 7 | 0.032 | 0.10 | 1.88 | 0.003 | 0.003 | 0.40 | 0.002 | 0.012 | 0.002 | 0.0035 | 0.0007 | 0.0019 | 0.50 | 0.000 | 0.01 | 0.00 | 0.0003 | 0.0003 | 0.003 | 0.003 | 0.001 | 0.0001 | 0.061 | 0.225 | 0.00063 | 0.20 |
| | 8 | 0.041 | 0.11 | 1.63 | 0.004 | 0.003 | 0.45 | 0.002 | 0.014 | 0.001 | 0.0033 | 0.0003 | 0.0024 | 0.00 | 0.000 | 0.01 | 0.00 | 0.0001 | 0.0002 | 0.002 | 0.002 | 0.002 | 0.0000 | 0.048 | 0.181 | 0.00030 | 0.10 |
| | 9 | 0.015 | 0.12 | 1.92 | 0.004 | 0.002 | 0.51 | 0.002 | 0.013 | 0.002 | 0.0039 | 0.0006 | 0.0021 | 0.00 | 0.000 | 0.01 | 0.00 | 0.0003 | 0.0000 | 0.003 | 0.003 | 0.001 | 0.0003 | 0.023 | 0.178 | 0.00036 | 0.11 |
| | 10 | 0.038 | 0.13 | 1.68 | 0.005 | 0.003 | 0.41 | 0.002 | 0.015 | 0.000 | 0.0035 | 0.0005 | 0.0022 | 0.00 | 0.000 | 0.01 | 0.01 | 0.0002 | 0.0002 | 0.001 | 0.001 | 0.002 | 0.0003 | 0.044 | 0.186 | 0.00050 | 0.16 |
| | 11 | 0.032 | 0.12 | 1.96 | 0.004 | 0.003 | 0.31 | 0.002 | 0.011 | 0.001 | 0.0037 | 0.0010 | 0.0020 | 0.27 | 0.009 | 0.01 | 0.00 | 0.0000 | 0.0001 | 0.003 | 0.003 | 0.003 | 0.0002 | 0.052 | 0.221 | 0.00051 | 0.16 |
| | 12 | 0.039 | 0.11 | 1.94 | 0.004 | 0.003 | 0.43 | 0.003 | 0.014 | 0.002 | 0.0031 | 0.0007 | 0.0035 | 0.00 | 0.000 | 0.01 | 0.00 | 0.0003 | 0.0003 | 0.003 | 0.002 | 0.001 | 0.0003 | 0.045 | 0.200 | 0.00070 | 0.23 |
| | 13 | 0.044 | 0.14 | 2.01 | 0.005 | 0.002 | 0.49 | 0.002 | 0.012 | 0.003 | 0.0032 | 0.0004 | 0.0022 | 0.00 | 0.000 | 0.01 | 0.00 | 0.0003 | 0.0003 | 0.002 | 0.001 | 0.003 | 0.0001 | 0.051 | 0.217 | 0.00040 | 0.13 |
| | 14 | 0.040 | 0.13 | 1.87 | 0.003 | 0.003 | 0.44 | 0.002 | 0.012 | 0.002 | 0.0020 | 0.0005 | 0.0023 | 0.00 | 0.000 | 0.01 | 0.00 | 0.0002 | 0.0003 | 0.001 | 0.002 | 0.003 | 0.0003 | 0.047 | 0.201 | 0.00050 | 0.16 |
| | 15 | 0.031 | 0.12 | 1.96 | 0.004 | 0.003 | 0.45 | 0.002 | 0.011 | 0.002 | 0.0028 | 0.0008 | 0.0023 | 0.00 | 0.000 | 0.01 | 0.00 | 0.0003 | 0.0002 | 0.002 | 0.000 | 0.002 | 0.0001 | 0.038 | 0.196 | 0.00080 | 0.26 |
| | 16 | 0.030 | 0.14 | 1.91 | 0.004 | 0.002 | 0.40 | 0.004 | 0.009 | 0.001 | 0.0033 | 0.0009 | 0.0035 | 0.00 | 0.000 | 0.01 | 0.00 | 0.0003 | 0.0003 | 0.001 | 0.003 | 0.001 | 0.0000 | 0.036 | 0.196 | 0.00037 | 0.12 |
| | 17 | 0.039 | 0.13 | 1.77 | 0.004 | 0.003 | 0.46 | 0.002 | 0.012 | 0.002 | 0.0049 | 0.0015 | 0.0018 | 0.00 | 0.000 | 0.01 | 0.00 | 0.0003 | 0.0003 | 0.003 | 0.003 | 0.003 | 0.0003 | 0.046 | 0.193 | 0.00040 | 0.13 |
| | 18 | 0.032 | 0.10 | 1.92 | 0.003 | 0.003 | 0.43 | 0.002 | 0.012 | 0.001 | 0.0033 | 0.0004 | 0.0019 | 0.00 | 0.018 | 0.01 | 0.00 | 0.0001 | 0.0003 | 0.002 | 0.002 | 0.003 | 0.0003 | 0.044 | 0.199 | 0.00040 | 0.13 |
| | 19 | 0.038 | 0.05 | 1.69 | 0.004 | 0.002 | 0.52 | 0.002 | 0.011 | 0.001 | 0.0030 | 0.0008 | 0.0021 | 0.00 | 0.000 | 0.00 | 0.00 | 0.0003 | 0.0001 | 0.001 | 0.001 | 0.002 | 0.0003 | 0.046 | 0.168 | 0.00080 | 0.26 |
| | 20 | 0.030 | 0.13 | 2.02 | 0.005 | 0.003 | 0.42 | 0.002 | 0.011 | 0.002 | 0.0030 | 0.0007 | 0.0024 | 0.30 | 0.000 | 0.01 | 0.00 | 0.0002 | 0.0003 | 0.002 | 0.002 | 0.003 | 0.0002 | 0.050 | 0.224 | 0.00057 | 0.18 |
| | 21 | 0.032 | 0.11 | 1.61 | 0.004 | 0.003 | 0.80 | 0.002 | 0.009 | 0.002 | 0.0035 | 0.0010 | 0.0018 | 0.00 | 0.000 | 0.01 | 0.00 | 0.0000 | 0.0001 | 0.001 | 0.003 | 0.001 | 0.0002 | 0.044 | 0.174 | 0.00031 | 0.10 |
| | 22 | 0.044 | 0.14 | 1.86 | 0.003 | 0.003 | 0.40 | 0.002 | 0.011 | 0.001 | 0.0037 | 0.0008 | 0.0019 | 0.00 | 0.020 | 0.00 | 0.00 | 0.0003 | 0.0002 | 0.001 | 0.000 | 0.000 | 0.0001 | 0.057 | 0.217 | 0.00035 | 0.12 |
| | 23 | 0.026 | 0.17 | 2.30 | 0.004 | 0.003 | 0.12 | 0.002 | 0.011 | 0.001 | 0.0034 | 0.0007 | 0.0020 | 0.04 | 0.000 | 0.01 | 0.00 | 0.0001 | 0.0003 | 0.002 | 0.002 | 0.003 | 0.0002 | 0.030 | 0.225 | 0.00044 | 0.14 |
| | 24 | 0.037 | 0.07 | 1.93 | 0.004 | 0.002 | 0.32 | 0.002 | 0.011 | 0.001 | 0.0032 | 0.0006 | 0.0022 | 0.00 | 0.000 | 0.02 | 0.00 | 0.0002 | 0.0003 | 0.000 | 0.001 | 0.002 | 0.0003 | 0.042 | 0.186 | 0.00040 | 0.13 |
| | 25 | 0.038 | 0.18 | 2.10 | 0.004 | 0.002 | 0.19 | 0.002 | 0.010 | 0.001 | 0.0030 | 0.0008 | 0.0024 | 0.00 | 0.000 | 0.01 | 0.00 | 0.0003 | 0.0003 | 0.003 | 0.002 | 0.001 | 0.0003 | 0.041 | 0.224 | 0.00045 | 0.15 |
| | 26 | 0.024 | 0.15 | 1.92 | 0.005 | 0.003 | 0.52 | 0.002 | 0.011 | 0.001 | 0.0030 | 0.0007 | 0.0022 | 0.00 | 0.000 | 0.02 | 0.00 | 0.0002 | 0.0002 | 0.003 | 0.001 | 0.001 | 0.0002 | 0.032 | 0.194 | 0.00066 | 0.21 |
| | 27 | 0.034 | 0.12 | 1.85 | 0.005 | 0.003 | 0.45 | 0.002 | 0.012 | 0.001 | 0.0031 | 0.0008 | 0.0029 | 0.00 | 0.000 | 0.01 | 0.00 | 0.0001 | 0.0002 | 0.002 | 0.001 | 0.002 | 0.0002 | 0.041 | 0.191 | 0.00059 | 0.19 |
| | 28 | 0.036 | 0.13 | 1.86 | 0.004 | 0.003 | 0.43 | 0.003 | 0.007 | 0.002 | 0.0025 | 0.0009 | 0.0018 | 0.00 | 0.000 | 0.00 | 0.00 | 0.0003 | 0.0000 | 0.001 | 0.002 | 0.002 | 0.0001 | 0.042 | 0.196 | 0.00054 | 0.18 |
| | 29 | 0.032 | 0.12 | 1.78 | 0.005 | 0.003 | 0.46 | 0.002 | 0.008 | 0.001 | 0.0030 | 0.0010 | 0.0020 | 0.00 | 0.000 | 0.00 | 0.01 | 0.0000 | 0.0003 | 0.002 | 0.001 | 0.003 | 0.0001 | 0.039 | 0.185 | 0.00038 | 0.12 |
| | 30 | 0.035 | 0.14 | 1.83 | 0.004 | 0.003 | 0.44 | 0.003 | 0.010 | 0.002 | 0.0036 | 0.0013 | 0.0023 | 0.00 | 0.000 | 0.01 | 0.00 | 0.0003 | 0.0003 | 0.001 | 0.002 | 0.001 | 0.0002 | 0.042 | 0.196 | 0.00076 | 0.25 |
| | 31 | 0.041 | 0.13 | 1.90 | 0.005 | 0.002 | 0.70 | 0.003 | 0.011 | 0.001 | 0.0033 | 0.0008 | 0.0021 | 0.00 | 0.000 | 0.02 | 0.00 | 0.0003 | 0.0001 | 0.000 | 0.003 | 0.003 | 0.0000 | 0.051 | 0.206 | 0.00072 | 0.24 |
| | 32 | 0.030 | 0.13 | 1.86 | 0.005 | 0.003 | 0.47 | 0.002 | 0.010 | 0.001 | 0.0031 | 0.0007 | 0.0022 | 0.03 | 0.000 | 0.01 | 0.00 | 0.0000 | 0.0002 | 0.000 | 0.003 | 0.003 | 0.0003 | 0.038 | 0.193 | 0.00036 | 0.11 |
| | 33 | 0.018 | 0.16 | 1.96 | 0.005 | 0.003 | 0.20 | 0.002 | 0.010 | 0.001 | 0.0032 | 0.0010 | 0.0022 | 0.00 | 0.000 | 0.02 | 0.00 | 0.0003 | 0.0000 | 0.003 | 0.002 | 0.002 | 0.0003 | 0.021 | 0.190 | 0.00058 | 0.18 |
| | 34 | 0.032 | 0.13 | 1.86 | 0.004 | 0.003 | 0.41 | 0.001 | 0.011 | 0.001 | 0.0027 | 0.0008 | 0.0021 | 0.00 | 0.000 | 0.01 | 0.00 | 0.0001 | 0.0001 | 0.003 | 0.003 | 0.001 | 0.0002 | 0.038 | 0.192 | 0.00064 | 0.21 |

[Table 2]

[Table 2]

| COMPARATIVE STEEL | | CHEMICAL COMPOSITION(mass%) | | | | | | | | | | | | | | | | | | | | | | | | | |
|---|---|---|---|---|---|---|---|---|---|---|---|---|---|---|---|---|---|---|---|---|---|---|---|---|---|---|---|
| | | C | Si | Mn | P | S | Ni | Al | Ti | Nb | N | B | O | Cu | V | Cr | Mo | Ca | Mg | Sb | Sn | As | REM | $P_{CTOD}$ | $C_{eqH}$ | FB | Bp |
| | 35 | 0.027 | 0.18 | 2.30 | 0.004 | 0.003 | 0.09 | 0.002 | 0.011 | 0.001 | 0.0034 | 0.0007 | 0.0020 | 0.00 | 0.000 | 0.00 | 0.00 | 0.0000 | 0.0000 | 0.001 | 0.001 | 0.001 | 0.0001 | 0.028 | 0.225 | 0.00044 | 0.14 |
| | 36 | 0.044 | 0.11 | 1.89 | 0.004 | 0.002 | 0.41 | 0.002 | 0.016 | 0.000 | 0.0031 | 0.0006 | 0.0022 | 0.00 | 0.000 | 0.01 | 0.00 | 0.0001 | 0.0000 | 0.003 | 0.001 | 0.000 | 0.0001 | 0.050 | 0.201 | 0.00060 | 0.20 |
| | 37 | 0.039 | 0.06 | 2.56 | 0.005 | 0.003 | 0.43 | 0.002 | 0.010 | 0.001 | 0.0033 | 0.0007 | 0.0019 | 0.00 | 0.000 | 0.02 | 0.00 | 0.0003 | 0.0003 | 0.002 | 0.002 | 0.001 | 0.0003 | 0.045 | 0.229 | 0.00034 | 0.11 |
| | 38 | 0.047 | 0.09 | 1.76 | 0.004 | 0.003 | 0.40 | 0.002 | 0.012 | 0.002 | 0.0036 | 0.0015 | 0.0023 | 0.00 | 0.000 | 0.01 | 0.00 | 0.0002 | 0.0003 | 0.001 | 0.001 | 0.002 | 0.0003 | 0.053 | 0.191 | 0.00118 | 0.39 |
| | 39 | 0.032 | 0.10 | 1.96 | 0.004 | 0.003 | 0.46 | 0.003 | 0.010 | 0.002 | 0.0029 | 0.0006 | 0.0037 | 0.00 | 0.000 | 0.00 | 0.00 | 0.0000 | 0.0002 | 0.002 | 0.002 | 0.003 | 0.0002 | 0.039 | 0.192 | 0 | 0.00 |
| | 40 | 0.040 | 0.19 | 1.99 | 0.004 | 0.002 | 0.56 | 0.002 | 0.011 | 0.001 | 0.0032 | 0.0006 | 0.0023 | 0.00 | 0.020 | 0.02 | 0.00 | 0.0003 | 0.0001 | 0.001 | 0.001 | 0.003 | 0.0001 | 0.055 | 0.236 | 0.00036 | 0.12 |
| | 41 | 0.041 | 0.10 | 1.88 | 0.005 | 0.003 | 0.43 | 0.002 | 0.009 | 0.001 | 0.0032 | 0.0016 | 0.0019 | 0.00 | 0.000 | 0.01 | 0.01 | 0.0003 | 0.0003 | 0.000 | 0.001 | 0.002 | 0.0002 | 0.047 | 0.195 | 0.00109 | 0.36 |
| | 42 | 0.032 | 0.15 | 1.75 | 0.005 | 0.003 | 0.20 | 0.002 | 0.012 | 0.001 | 0.0036 | 0.0007 | 0.0023 | 0.60 | 0.000 | 0.02 | 0.00 | 0.0001 | 0.0003 | 0.003 | 0.002 | 0.003 | 0.0002 | 0.062 | 0.234 | 0.00038 | 0.12 |
| | 43 | 0.039 | 0.22 | 1.82 | 0.004 | 0.003 | 0.42 | 0.002 | 0.011 | 0.002 | 0.0030 | 0.0006 | 0.0025 | 0.00 | 0.000 | 0.02 | 0.00 | 0.0003 | 0.0001 | 0.002 | 0.001 | 0.001 | 0.0001 | 0.045 | 0.218 | 0.00042 | 0.14 |
| | 44 | 0.032 | 0.12 | 1.85 | 0.004 | 0.003 | 0.40 | 0.002 | 0.020 | 0.001 | 0.0033 | 0.0005 | 0.0018 | 0.00 | 0.000 | 0.01 | 0.00 | 0.0002 | 0.0003 | 0.001 | 0.002 | 0.003 | 0.0002 | 0.038 | 0.189 | 0.00050 | 0.16 |
| | 45 | 0.042 | 0.14 | 2.01 | 0.004 | 0.004 | 0.44 | 0.002 | 0.013 | 0.003 | 0.0041 | 0.0002 | 0.0021 | 0.00 | 0.000 | 0.00 | 0.00 | 0.0000 | 0.0002 | 0.002 | 0.003 | 0.002 | 0.0001 | 0.049 | 0.215 | 0 | 0.00 |
| | 46 | 0.032 | 0.12 | 1.83 | 0.003 | 0.003 | 0.43 | 0.002 | 0.011 | 0.001 | 0.0036 | 0.0007 | 0.0023 | 0.00 | 0.026 | 0.02 | 0.00 | 0.0001 | 0.0000 | 0.001 | 0.003 | 0.001 | 0.0000 | 0.047 | 0.202 | 0 | 0.00 |
| | 47 | 0.031 | 0.09 | 1.54 | 0.004 | 0.003 | 0.47 | 0.002 | 0.011 | 0.001 | 0.0036 | 0.0008 | 0.0024 | 0.00 | 0.000 | 0.02 | 0.00 | 0.0003 | 0.0003 | 0.003 | 0.002 | 0.002 | 0.0003 | 0.038 | 0.160 | 0.00021 | 0.07 |
| | 48 | 0.040 | 0.10 | 2.10 | 0.004 | 0.003 | 0.52 | 0.002 | 0.010 | 0.002 | 0.0030 | 0.0006 | 0.0022 | 0.25 | 0.020 | 0.01 | 0.00 | 0.0002 | 0.0001 | 0.002 | 0.003 | 0.000 | 0.0002 | 0.066 | 0.240 | 0.00034 | 0.11 |
| | 49 | 0.033 | 0.12 | 1.87 | 0.005 | 0.002 | 0.46 | 0.002 | 0.012 | 0.002 | 0.0032 | 0.0018 | 0.0026 | 0.00 | 0.000 | 0.00 | 0.00 | 0.0000 | 0.0000 | 0.001 | 0.001 | 0.003 | 0.0003 | 0.040 | 0.192 | 0.00165 | 0.53 |
| | 50 | 0.042 | 0.08 | 1.95 | 0.004 | 0.003 | 0.43 | 0.002 | 0.004 | 0.001 | 0.0035 | 0.0006 | 0.0018 | 0.00 | 0.000 | 0.02 | 0.00 | 0.0003 | 0.0003 | 0.002 | 0.000 | 0.003 | 0.0001 | 0.048 | 0.196 | 0 | 0.00 |
| | 51 | 0.031 | 0.13 | 1.84 | 0.004 | 0.003 | 0.41 | 0.002 | 0.008 | 0.002 | 0.0066 | 0.0004 | 0.0023 | 0.00 | 0.000 | 0.01 | 0.01 | 0.0003 | 0.0001 | 0.001 | 0.003 | 0.002 | 0.0003 | 0.037 | 0.190 | 0 | 0.00 |
| | 52 | 0.043 | 0.15 | 1.71 | 0.005 | 0.003 | 0.44 | 0.002 | 0.011 | 0.001 | 0.0036 | 0.0007 | 0.0024 | 0.00 | 0.000 | 0.02 | 0.00 | 0.0002 | 0.0003 | 0.003 | 0.003 | 0.001 | 0.0001 | 0.050 | 0.198 | 0.00038 | 0.13 |
| | 53 | 0.041 | 0.14 | 1.85 | 0.004 | 0.003 | 0.45 | 0.002 | 0.011 | 0.005 | 0.0032 | 0.0008 | 0.0021 | 0.00 | 0.000 | 0.01 | 0.00 | 0.0003 | 0.0002 | 0.002 | 0.002 | 0.002 | 0.0000 | 0.048 | 0.203 | 0.00065 | 0.21 |
| | 54 | 0.044 | 0.13 | 1.88 | 0.003 | 0.002 | 0.43 | 0.002 | 0.010 | 0.002 | 0.0027 | 0.0011 | 0.0022 | 0.00 | 0.000 | 0.02 | 0.00 | 0.0002 | 0.0000 | 0.003 | 0.001 | 0.002 | 0.0003 | 0.050 | 0.206 | 0.00107 | 0.35 |
| | 55 | 0.034 | 0.12 | 1.84 | 0.004 | 0.003 | 0.45 | 0.002 | 0.009 | 0.001 | 0.0030 | 0.0009 | 0.0014 | 0.00 | 0.000 | 0.02 | 0.00 | 0.0003 | 0.0003 | 0.002 | 0.002 | 0.000 | 0.0003 | 0.041 | 0.191 | 0.00060 | 0.19 |

[Table 3]

| STEEL | THICKNESS (mm) | COOLING RATE OF SLAB (°C/min) | REHEATING TEMPERATURE (°C) | THERMO-MECHANICAL TREATMENT METHOD | CUMULATIVE ROLLING REDUCTION (%) IN NON-CRYSTALLIZATION TEMPERATURE RANGE | YS (N/mm²) | TS (N/mm²) | NUMBER OF OXIDE PARTICLES HAVING EQUIVALENT CIRCLE DIAMETER OF 2 μm OR GREATER (PARTICLES/mm²) | NUMBER OF Ti OXIDE PARTICLES HAVING CIRCLE DIAMETER OF 0.05 to 0.5 μm (PARTICLES/mm²) | FL NOTCH δ cave (mm) | FL NOTCH δ cmin (mm) | IC NOTCH δ cave (mm) | IC NOTCH δ cmin (mm) | IGF FRACTION (%) OF FL ZONE OF WELDED JOINT | |
|---|---|---|---|---|---|---|---|---|---|---|---|---|---|---|---|
| 1 | 60 | 12 | 1000 | ACC | 50 | 472 | 537 | 8 | $7.2 \times 10^3$ | 0.65 | 0.50 | 0.79 | 0.63 | 95 | EXAMPLE ACCORDING TO PRESENT INVENTION |
| 2 | 40 | 13 | 1050 | ACC+T | 50 | 421 | 501 | 10 | $1.3 \times 10^4$ | 0.51 | 0.39 | 0.84 | 0.68 | 93 | EXAMPLE ACCORDING TO PRESENT INVENTION |
| 3 | 40 | 11 | 1050 | ACC+T | 40 | 424 | 505 | 12 | $7.0 \times 10^3$ | 0.53 | 0.41 | 0.82 | 0.66 | 93 | EXAMPLE ACCORDING TO PRESENT INVENTION |
| 4 | 40 | 14 | 1080 | ACC | 45 | 429 | 488 | 10 | $1.8 \times 10^4$ | 0.46 | 0.36 | 0.84 | 0.68 | 91 | EXAMPLE ACCORDING TO PRESENT INVENTION |
| 5 | 45 | 12 | 1100 | ACC+T | 40 | 449 | 534 | 9 | $6.8 \times 10^3$ | 0.51 | 0.39 | 0.83 | 0.67 | 92 | EXAMPLE ACCORDING TO PRESENT INVENTION |
| 6 | 35 | 11 | 1080 | ACC | 40 | 422 | 480 | 10 | $6.5 \times 10^3$ | 0.36 | 0.30 | 0.83 | 0.67 | 96 | EXAMPLE ACCORDING TO PRESENT INVENTION |
| 7 | 40 | 12 | 1050 | ACC | 40 | 431 | 490 | 11 | $7.4 \times 10^3$ | 0.40 | 0.33 | 0.82 | 0.66 | 95 | EXAMPLE ACCORDING TO PRESENT INVENTION |
| 8 | 30 | 13 | 1080 | ACC | 40 | 421 | 481 | 14 | $1.2 \times 10^4$ | 0.52 | 0.39 | 0.85 | 0.69 | 92 | EXAMPLE ACCORDING TO PRESENT INVENTION |
| 9 | 40 | 15 | 1050 | ACC | 40 | 422 | 480 | 12 | $1.9 \times 10^4$ | 0.77 | 0.56 | 0.83 | 0.67 | 94 | EXAMPLE ACCORDING TO PRESENT INVENTION |
| 10 | 35 | 12 | 1100 | CR | 55 | 425 | 545 | 10 | $6.9 \times 10^3$ | 0.56 | 0.41 | 0.85 | 0.69 | 95 | EXAMPLE ACCORDING TO PRESENT INVENTION |
| 11 | 40 | 11 | 1050 | ACC | 45 | 429 | 488 | 13 | $6.6 \times 10^3$ | 0.48 | 0.38 | 0.81 | 0.65 | 95 | EXAMPLE ACCORDING TO PRESENT INVENTION |
| 12 | 45 | 13 | 1080 | ACC+T | 50 | 434 | 517 | 10 | $1.1 \times 10^4$ | 0.55 | 0.41 | 0.83 | 0.67 | 96 | EXAMPLE ACCORDING TO PRESENT INVENTION |
| 13 | 50 | 15 | 950 | ACC+T | 50 | 432 | 514 | 13 | $1.9 \times 10^4$ | 0.49 | 0.38 | 0.82 | 0.66 | 93 | EXAMPLE ACCORDING TO PRESENT INVENTION |
| 14 | 35 | 12 | 1030 | ACC | 35 | 423 | 481 | 11 | $8.1 \times 10^3$ | 0.53 | 0.41 | 0.83 | 0.67 | 95 | EXAMPLE ACCORDING TO PRESENT INVENTION |
| 15 | 40 | 10 | 1060 | ACC+T | 40 | 422 | 503 | 16 | $3.6 \times 10^3$ | 0.62 | 0.46 | 0.83 | 0.67 | 96 | EXAMPLE ACCORDING TO PRESENT INVENTION |
| 16 | 35 | 13 | 1050 | ACC | 40 | 424 | 482 | 14 | $1.3 \times 10^4$ | 0.64 | 0.48 | 0.82 | 0.67 | 94 | EXAMPLE ACCORDING TO PRESENT INVENTION |
| 17 | 40 | 12 | 1080 | CR | 40 | 421 | 540 | 12 | $7.4 \times 10^3$ | 0.54 | 0.40 | 0.84 | 0.68 | 93 | EXAMPLE ACCORDING TO PRESENT INVENTION |
| 18 | 40 | 11 | 1050 | ACC | 40 | 420 | 480 | 11 | $7.2 \times 10^3$ | 0.56 | 0.42 | 0.83 | 0.67 | 93 | EXAMPLE ACCORDING TO PRESENT INVENTION |
| 19 | 35 | 12 | 1050 | ACC | 45 | 423 | 481 | 10 | $7.0 \times 10^3$ | 0.54 | 0.40 | 0.86 | 0.70 | 96 | EXAMPLE ACCORDING TO PRESENT INVENTION |
| 20 | 35 | 14 | 1080 | CR | 55 | 452 | 579 | 12 | $1.5 \times 10^4$ | 0.50 | 0.40 | 0.80 | 0.65 | 95 | EXAMPLE ACCORDING TO PRESENT INVENTION |
| 21 | 35 | 12 | 1060 | ACC+T | 40 | 420 | 500 | 10 | $7.6 \times 10^3$ | 0.56 | 0.41 | 0.85 | 0.69 | 91 | EXAMPLE ACCORDING TO PRESENT INVENTION |
| 22 | 40 | 11 | 1050 | ACC | 40 | 425 | 483 | 12 | $7.3 \times 10^3$ | 0.47 | 0.37 | 0.82 | 0.66 | 94 | EXAMPLE ACCORDING TO PRESENT INVENTION |
| 23 | 60 | 12 | 1000 | ACC | 50 | 468 | 530 | 9 | $7.4 \times 10^3$ | 0.62 | 0.51 | 0.75 | 0.65 | 95 | EXAMPLE ACCORDING TO PRESENT INVENTION |
| 24 | 35 | 13 | 1100 | CR | 55 | 427 | 549 | 10 | $7.0 \times 10^3$ | 0.54 | 0.45 | 0.81 | 0.70 | 94 | EXAMPLE ACCORDING TO PRESENT INVENTION |
| 25 | 45 | 11 | 1080 | ACC+T | 50 | 436 | 519 | 9 | $7.2 \times 10^3$ | 0.58 | 0.43 | 0.83 | 0.69 | 95 | EXAMPLE ACCORDING TO PRESENT INVENTION |
| 26 | 40 | 14 | 1050 | ACC | 45 | 431 | 493 | 11 | $7.3 \times 10^3$ | 0.42 | 0.38 | 0.81 | 0.68 | 95 | EXAMPLE ACCORDING TO PRESENT INVENTION |
| 27 | 30 | 12 | 1050 | ACC | 40 | 427 | 495 | 13 | $7.1 \times 10^3$ | 0.53 | 0.42 | 0.80 | 0.69 | 94 | EXAMPLE ACCORDING TO PRESENT INVENTION |
| 28 | 40 | 11 | 1000 | ACC | 40 | 432 | 492 | 12 | $7.4 \times 10^3$ | 0.48 | 0.44 | 0.83 | 0.66 | 93 | EXAMPLE ACCORDING TO PRESENT INVENTION |
| 29 | 35 | 13 | 1050 | ACC | 45 | 422 | 483 | 10 | $6.8 \times 10^3$ | 0.51 | 0.48 | 0.82 | 0.67 | 91 | EXAMPLE ACCORDING TO PRESENT INVENTION |
| 30 | 45 | 12 | 1050 | ACC | 40 | 431 | 490 | 12 | $6.9 \times 10^3$ | 0.53 | 0.44 | 0.82 | 0.65 | 96 | EXAMPLE ACCORDING TO PRESENT INVENTION |
| 31 | 45 | 14 | 1000 | ACC | 45 | 434 | 489 | 11 | $7.2 \times 10^3$ | 0.49 | 0.42 | 0.84 | 0.68 | 95 | EXAMPLE ACCORDING TO PRESENT INVENTION |
| 32 | 40 | 12 | 1050 | ACC | 45 | 425 | 485 | 13 | $7.0 \times 10^3$ | 0.45 | 0.40 | 0.82 | 0.69 | 90 | EXAMPLE ACCORDING TO PRESENT INVENTION |
| 33 | 35 | 11 | 1050 | ACC | 40 | 425 | 492 | 11 | $7.1 \times 10^3$ | 0.52 | 0.48 | 0.80 | 0.72 | 91 | EXAMPLE ACCORDING TO PRESENT INVENTION |

Column groupings: PRODUCTION CONDITIONS (THICKNESS, COOLING RATE OF SLAB, REHEATING TEMPERATURE, THERMO-MECHANICAL TREATMENT METHOD, CUMULATIVE ROLLING REDUCTION); BASE METAL PROPERTIES (YS, TS, NUMBER OF OXIDE PARTICLES, NUMBER OF Ti OXIDE PARTICLES); CTOD PROPERTIES OF WELDED JOINT (-60°C) (FL NOTCH, IC NOTCH, IGF FRACTION).

[Table 4]

[Table 4]

| STEEL | THICKNESS (mm) | PRODUCTION CONDITIONS | | | | BASE METAL PROPERTIES | | | | CTOD PROPERTIES OF WELDED JOINT (-80°C) | | | | IGF FRACTION (%) OF FL ZONE OF WELDED JOINT | |
|---|---|---|---|---|---|---|---|---|---|---|---|---|---|---|---|
| | | COOLING RATE OF SLAB (°C/min) | REHEATING TEMPERATURE (°C) | THERMO-MECHANICAL TREATMENT METHOD | CUMULATIVE ROLLING REDUCTION (%) IN NON-CRYSTALLIZATION TEMPERATURE RANGE | YS (N/mm²) | TS (N/mm²) | NUMBER OF OXIDE PARTICLES HAVING EQUIVALENT CIRCLE DIAMETER OF 2 μm OR GREATER (PARTICLES/mm²) | NUMBER OF Ti OXIDE PARTICLES HAVING EQUIVALENT CIRCLE DIAMETER OF 0.05 μm TO 0.5 μm (PARTICLES/mm²) | FL NOTCH | | IC NOTCH | | | |
| | | | | | | | | | | δ cave. (mm) | δ cmin. (mm) | δ cave. (mm) | δ cmin. (mm) | | |
| 34 | 40 | 4 | 1100 | ACC | 40 | 428 | 490 | 25 | $1.0 \times 10^2$ | 0.08 | 0.06 | 0.29 | 0.26 | 84 | COMPARATIVE EXAMPLE |
| 35 | 50 | 11 | 1050 | ACC | 50 | 459 | 522 | 10 | $7.0 \times 10^3$ | 0.21 | 0.19 | 0.20 | 0.18 | 93 | COMPARATIVE EXAMPLE |
| 36 | 40 | 12 | 1100 | ACC | 40 | 430 | 489 | 13 | $7.7 \times 10^3$ | 0.04 | 0.02 | 0.52 | 0.41 | 92 | COMPARATIVE EXAMPLE |
| 37 | 50 | 11 | 1050 | ACC | 40 | 451 | 513 | 11 | $7.1 \times 10^3$ | 0.06 | 0.03 | 0.08 | 0.05 | 94 | COMPARATIVE EXAMPLE |
| 38 | 40 | 14 | 1100 | ACC | 40 | 408 | 464 | 12 | $1.3 \times 10^4$ | 0.04 | 0.01 | 0.51 | 0.41 | 91 | COMPARATIVE EXAMPLE |
| 39 | 40 | 12 | 1100 | ACC+T | 50 | 441 | 525 | 22 | $7.1 \times 10^3$ | 0.03 | 0.01 | 0.69 | 0.21 | 81 | COMPARATIVE EXAMPLE |
| 40 | 45 | 12 | 1080 | ACC | 45 | 452 | 513 | 12 | $7.3 \times 10^3$ | 0.29 | 0.27 | 0.05 | 0.02 | 90 | COMPARATIVE EXAMPLE |
| 41 | 35 | 13 | 1080 | ACC | 45 | 419 | 476 | 11 | $1.2 \times 10^4$ | 0.05 | 0.02 | 0.31 | 0.26 | 94 | COMPARATIVE EXAMPLE |
| 42 | 35 | 12 | 1030 | ACC+T | 50 | 399 | 475 | 13 | $7.7 \times 10^3$ | 0.08 | 0.04 | 0.07 | 0.05 | 91 | COMPARATIVE EXAMPLE |
| 43 | 40 | 11 | 1100 | ACC | 40 | 412 | 482 | 14 | $7.4 \times 10^3$ | 0.07 | 0.02 | 0.44 | 0.34 | 92 | COMPARATIVE EXAMPLE |
| 44 | 35 | 12 | 1100 | ACC | 40 | 408 | 464 | 12 | $7.2 \times 10^3$ | 0.09 | 0.03 | 0.29 | 0.26 | 93 | COMPARATIVE EXAMPLE |
| 45 | 40 | 10 | 1060 | ACC | 45 | 436 | 496 | 17 | $6.5 \times 10^3$ | 0.04 | 0.01 | 0.66 | 0.53 | 83 | COMPARATIVE EXAMPLE |
| 46 | 35 | 13 | 1080 | ACC | 40 | 405 | 475 | 10 | $1.1 \times 10^4$ | 0.03 | 0.01 | 0.58 | 0.46 | 82 | COMPARATIVE EXAMPLE |
| 47 | 30 | 12 | 1100 | ACC | 40 | 389 | 469 | 12 | $7.0 \times 10^3$ | 0.09 | 0.06 | 0.63 | 0.50 | 85 | COMPARATIVE EXAMPLE |
| 48 | 50 | 10 | 1100 | ACC | 45 | 497 | 565 | 19 | $3.1 \times 10^3$ | 0.03 | 0.01 | 0.06 | 0.02 | 91 | COMPARATIVE EXAMPLE |
| 49 | 40 | 14 | 1100 | ACC | 40 | 418 | 474 | 13 | $1.6 \times 10^4$ | 0.02 | 0.01 | 0.35 | 0.27 | 95 | COMPARATIVE EXAMPLE |
| 50 | 45 | 12 | 1080 | CR | 50 | 429 | 505 | 11 | $7.5 \times 10^3$ | 0.04 | 0.01 | 0.58 | 0.46 | 83 | COMPARATIVE EXAMPLE |
| 51 | 35 | 11 | 1080 | ACC | 40 | 398 | 487 | 14 | $6.9 \times 10^3$ | 0.04 | 0.02 | 0.29 | 0.24 | 81 | COMPARATIVE EXAMPLE |
| 52 | 35 | 10 | 1100 | ACC | 40 | 397 | 451 | 19 | $1.1 \times 10^2$ | 0.02 | 0.01 | 0.55 | 0.44 | 64 | COMPARATIVE EXAMPLE |
| 53 | 35 | 13 | 1100 | ACC | 40 | 423 | 480 | 12 | $7.6 \times 10^4$ | 0.09 | 0.06 | 0.32 | 0.25 | 93 | COMPARATIVE EXAMPLE |
| 54 | 40 | 11 | 1050 | ACC | 45 | 410 | 496 | 11 | $6.8 \times 10^3$ | 0.06 | 0.03 | 0.46 | 0.37 | 93 | COMPARATIVE EXAMPLE |
| 55 | 35 | 12 | 1050 | ACC | 40 | 423 | 490 | 12 | $1.2 \times 10^2$ | 0.08 | 0.06 | 0.36 | 0.31 | 62 | COMPARATIVE EXAMPLE |

[Industrial Applicability]

According to the aspect of the present invention, a high-strength steel for welding having high CTOD properties of the FL and the IC zone during multi-layer welding of small to medium heat input can be obtained.

**Claims**

1. A steel for welding consisting of, as steel components, by mass%,

C: a content [C] of 0.015% to 0.045%,
Si: a content [Si] of 0.05% to 0.20%,
Mn: a content [Mn] of 1.6% to 2.5%,
Ni: a content [Ni] of 0.1 % to 1.0%,
Ti: a content [Ti] of 0.005% to 0.015%,
B: a content [B] of 0.0003% to 0.0015%,
N: a content [N] of 0.002% to 0.006%,
O: a content [O] of 0.0015% to 0.0035%,
P: a content [P] limited to 0.008% or less,
S: a content [S] limited to 0.005% or less,
Al: a content [Al] limited to 0.004% or less,
Nb: a content [Nb] limited to 0.004% or less,
Cu: a content [Cu] limited to 0.5% or less,
V: a content [V] limited to 0.02% or less,
Cr: a content [Cr] limited to 0.1% or less,
Mo: a content [Mo] limited to 0.05% or less,
Ca: a content [Ca] limited to less than 0.0003%,
Mg: a content [Mg] limited to less than 0.0003%,
Sb: a content [Sb] limited to 0.005% or less,
Sn: a content [Sn] limited to 0.005% or less,
As: a content [As] limited to 0.005% or less, and
REM: a content [REM] limited to 0.005% or less, and
a balance consisting of Fe and unavoidable impurities,
in which $P_{CTOD}$ in the following equation 1 is less than or equal to 0.065%,
CeqH in the following equation 2 is less than or equal to 0.225%,
FB in the following equation 3 is greater than or equal to 0.0003%, and
Bp in the following equation 4 is 0.09% to 0.30%,
wherein in a thickness center portion of a cross-section in a thickness direction, the number of oxide particles having an equivalent circle diameter of 2 $\mu$m or greater is less than or equal to 20 particles/mm$^2$ and the number of Ti oxides having an equivalent circle diameter of 0.05 $\mu$m to 0.5 $\mu$m is $1.0 \times 10^3$ particles/mm$^2$ to $1.0 \times 10^5$ particles/mm$^2$, wherein:

$$P_{CTOD}=[C]+[Cu]/22+[Ni]/67+[V]/3 \qquad \text{(Equation 1)};$$

$$CeqH=[C]+[Si]/4.16+[Mn]/14.9+[Cu]/12.9+[Ni]/105+[V]/1.82 \qquad \text{(Equation 2)};$$

$$FB=[B]-0.77\times([N]-0.29\times([Ti]-2\times([O]-0.89\times[Al]))) \qquad \text{(Equation 3)},$$

wherein

$$\text{if } O'=[O]-0.89\times[Al] \leq 0, \text{ then } O'=0; \qquad .$$

$$\text{if Ti'}=[Ti]-2O' \leq 0, \text{ then Ti'}=0,$$

$$\text{if N'}=[N]-0.29 \times Ti' \leq 0, \text{ then N'}=0,$$

and

$$\text{if FB}=[B]-0.77 \times N' \leq 0, \text{ then FB}=0;$$

and

$$Bp=(884 \times [C] \times (1-0.3 \times [C]^2)+294) \times FB \qquad \text{(Equation 4)}.$$

2. The steel for welding according to Claim 1,
wherein the Cu content [Cu] is less than or equal to 0.03%.

3. The steel for welding according to Claim 1 or 2, wherein the B content [B] is greater than or equal to 0.0006%.

**Patentansprüche**

1. Ein Stahl zum Schweissen, bestehend aus, als Stahlkomponenten, in Massen-%,

C: einem Gehalt [C] von 0,015% bis 0,045%,
Si: einem Gehalt [Si] von 0,05% bis 0,20%,
Mn: einem Gehalt [Mn] von 1,6% bis 2,5%,
Ni: einem Gehalt [Ni] von 0,1% bis 1,0%,
Ti: einem Gehalt [Ti] von 0,005% bis 0,015%,
B: einem Gehalt [B] von 0,0003% bis 0,0015%,
N: einem Gehalt [N] von 0,002% bis 0,006%,
O: einem Gehalt [O] von 0,0015% bis 0,0035%,
P: einem Gehalt [P] beschränkt auf 0,008% oder weniger,
S: einem Gehalt [S] beschränkt auf 0,005% oder weniger,
Al: ein Gehalt [Al] beschränkt auf 0,004% oder weniger,
Nb: einem Gehalt [Nb] beschränkt auf 0,004% oder weniger,
Cu: einem Gehalt [Cu] beschränkt auf 0,5% oder weniger,
V: einem Gehalt [V] beschränkt auf 0,02% oder weniger,
Cr: einem Gehalt [Cr] beschränkt auf 0,1% oder weniger,
Mo: einem Gehalt [Mo] beschränkt auf 0,05% oder weniger,
Ca: einem Gehalt [Ca] beschränkt auf weniger als 0,0003%,
Mg: einem Gehalt [Mg] beschränkt auf weniger als 0,0003%,
Sb: einem Gehalt [Sb] beschränkt auf 0,005% oder weniger,
Sn: einem Gehalt [Sn] beschränkt auf 0,005% oder weniger,
As: einem Gehalt [As] beschränkt auf 0,005% oder weniger, und
REM: einem Gehalt [REM] beschränkt auf 0,005% oder weniger, und
einem Rest bestehend aus Fe und unvermeidbaren Verunreinigungen,
wobei $P_{CTOD}$ in der folgenden Gleichung 1 weniger als oder gleich 0,065% ist,
CeqH in der folgenden Gleichung 2 weniger als oder gleich 0,225% ist,
FB in der folgenden Gleichung 3 größer als oder gleich 0,0003% ist, und
Bp in der folgenden Gleichung 4 0,09% bis 0,30% ist,
wobei in einem Dickecenterteil eines Querschnitts in einer Dickenrichtung die Anzahl an Oxidteilchen mit einem äquivalenten Kreisdurchmesser von 2 $\mu$m oder größer weniger als oder gleich 20 Teilchen/mm$^2$ beträgt und die Anzahl an Ti-Oxiden mit einem äquivalenten Kreisdurchmesser von 0,05 $\mu$m bis 0,5$\mu$m 1,0$\times$10$^3$ Teilchen/mm$^2$ bis 1,0$\times$10$^5$ Teilchen/mm$^2$ beträgt, wobei

$$P_{CTOD}=[C]+[Cu]/22+[Ni]/67+[V]/3 \qquad \text{(Gleichung 1)};$$

$$CeqH=[C]+[Si]/4,16+[Mn]/14,9+[Cu]/12,9+[Ni]/105+[V]/1,82 \qquad \text{(Gleichung 2)};$$

$$FB=[B]-0,77\times([N]-0,29\times([Ti]-2\times([O]-0,89\times[Al]))) \qquad \text{(Gleichung 3)},$$

wobei

$$\text{falls } O'=[O]-0,89\times[Al] \leq 0, \text{ dann } O'=0;$$

$$\text{falls } Ti'=[Ti]-2O' \leq 0, \text{ dann } Ti'=0,$$

$$\text{falls } N'=[N]-0,29\times Ti' \leq 0, \text{ dann } N'=0,$$

und

$$\text{falls } FB=[B]-0,77\times N' \leq 0, \text{ dann } FB=0;$$

und

$$Bp=(884\times[C]\times(1-0,3\times[C]^2)+294)\times FB \qquad \text{(Gleichung 4)}.$$

**2.** Der Stahl zum Schweissen gemäß Anspruch 1,
wobei der Cu-Gehalt [Cu] weniger als oder gleich 0,03% ist.

**3.** Der Stahl zum Schweissen gemäß Anspruch 1 oder 2,
wobei der B-Gehalt [B] größer als oder gleich 0,0006% ist.

**Revendications**

**1.** Acier pour soudure consistant en, comme constituants d'acier, en % en masse,

C : une teneur [C] de 0,015 % à 0,045 %,
Si : une teneur [Si] de 0,05 % à 0,20 %,
Mn : une teneur [Mn] de 1,6 % à 2,5 %,
Ni : une teneur [Ni] de 0,1 % à 1,0 %,
Ti : une teneur [Ti] de 0,005 % à 0,015 %,
B : une teneur [B] de 0,0003 % à 0,0015 %,
N : une teneur [N] de 0,002 % à 0,006 %,
O : une teneur [O] de 0,0015 % à 0,0035 %,
P : une teneur [P] limitée à 0,008 % ou inférieure,
S : une teneur [S] limitée à 0,005 % ou inférieure,
Al : une teneur [Al] limitée à 0,004 % ou inférieure,
Nb : une teneur [Nb] limitée à 0,004 % on inférieure,
Cu : une teneur [Cu] limitée à 0,5 % ou inférieure,
V : une teneur [V] limitée à 0,02 % ou inférieure,
Cr : une teneur [Cr] limitée à 0,1 % ou inférieure,
Mo : une teneur [Mo] limitée à 0,05 % ou inférieure,

Ca : une teneur [Ca] limitée à moins de 0,0003 %,
Mg : une teneur [Mg] limitée à moins de 0,0003 %,
Sb : une teneur [Sb] limitée à 0,005 % ou inférieure,
Sn : une teneur [Sn] limitée à 0,005 % ou inférieure,
As : une teneur [As] limitée à 0,005 % ou inférieure, et
REM : une teneur [REM] limitée à 0,005 % ou inférieure, et
un reste consistant en Fe et en impuretés inévitables,
dans lequel $P_{CTOD}$ dans l'équation 1 suivante est inférieur ou égal à 0,065 %,
CeqH dans l'équation 2 suivante est inférieur ou égal à 0,225 %,
FB dans l'équation 3 suivante est supérieur ou égal à 0,0003 %, et
Bp dans l'équation 4 suivante est de 0,09 % à 0,30 %,
dans lequel dans une portion de centre d'épaisseur d'une section transversale dans une direction d'épaisseur, le nombre de particules d'oxyde ayant un diamètre de cercle équivalent de 2 $\mu$m ou supérieur est inférieur ou égal à 20 particules/mm$^2$ et le nombre d'oxydes de Ti ayant un diamètre de cercle équivalent de 0,05 $\mu$m à 0,5 $\mu$m est de $1,0 \times 10^3$ particules/mm$^2$ à $1,0 \times 10^5$ particules/mm$^2$, où :

$$P_{CTOD}=[C]+[Cu]/22+[Ni]/67+[V]/3 \qquad (\text{équation 1}) \,;$$

$$CeqH=[C]+[Si]/4,16+[Mn]/14,9+[Cu]/12,9+[Ni]/105+[V]/1,82 \qquad (\text{équation 2}) \,;$$

$$FB=[B]-0,77x([N]-0,29x([Ti]-2x([O]-0,89x[Al]))) \qquad (\text{équation 3}),$$

où

$$si \ O'=[O]-0,89x[Al] \leq 0, \ alors \ O'=0 \,;$$

$$si \ Ti'=[Ti]-2O' \leq 0, \ alors \ Ti'=0,$$

$$si \ N'=[N]-0,29xTi' \leq 0, \ alors \ N'=0,$$

et

$$si \ FB=[B]-0,77xN' \leq 0, \ alors \ FB=0 \,;$$

et

$$Bp=(884x[C]x(1-0,3x[C]^2)+294)xFB \qquad (\text{équation 4}).$$

2. Acier pour soudure selon la revendication 1,
   dans lequel la teneur en [Cu] est inférieure ou égale à 0,03 %.

3. Acier pour soudure selon la revendication 1 ou 2,
   dans lequel la teneur en B [B] est supérieure ou égale à 0,0006 %.

## FIG. 1

## FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007002271 A
- JP 2010248590 A
- WO 2010134323 A1
- JP H091303 B
- WO 2009072559 A1
- US 20100078097 A1
- JP H09310147 B
- EP 2400041 A1
- DE 60108350 T2
- US 5985053 B